# EUROPEAN PATENT SPECIFICATION

(11) **EP 3 587 167 B1**
(45) Date of publication and mention of the grant of the patent: **04.01.2023**
(21) Application number: 18756899.3
(22) Date of filing: 16.02.2018
(51) Int. Cl.: B60L 15/20, B60L 3/00, B60L 58/10, B61F 5/12

(54) **ACTUATOR APPARATUS**
AKTUATORGERÄT
APPAREIL D'ACTIONNEUR

(30) Priority: 22.02.2017 JP 2017031084
(43) Date of publication of application: 01.01.2020
(73) Proprietor: Hitachi Astemo, Ltd., Hitachinaka-shi, Ibaraki 312-8503 (JP)
(72) Inventor: KODA, Naoki, Hitachinaka-shi Ibaraki 312-8503 (JP); RI, Tomoyuki, Hitachinaka-shi Ibaraki 312-8503 (JP)
(74) Representative: Hoffmann Eitle
(86) International application number: PCT/JP2018/005436
(87) International publication number: WO 2018/155329

(56) References cited:
- EP-A1- 2 848 490
- DE-A1-102016 122 651
- DE-A1-102016 124 132
- DE-T5-112018 005 486
- JP-A- 2010 183 771
- JP-A- 2014 069 677
- JP-A- 2017 022 948

## Description

### TECHNICAL FIELD

The present invention relates to, for example, an actuator apparatus that reduces a vibration of a railway vehicle.

### BACKGROUND ART

As one example of a control suspension system for a railway vehicle, there is known, for example, a semi-active suspension system including a damping force adjustable damper as an actuator disposed between a bogie and a vehicle body of a vehicle. The semi-active suspension system can control (change) a damping force in real time according to a vibration state of the vehicle body, thereby improving ride comfort of the vehicle.

Now, power is supplied from an overhead line or a generator mounted on the railway vehicle to the control suspension system of the railway vehicle. One possible configuration in this case is that the control suspension system is configured to monitor a voltage value of a power source supplied to the control suspension system, thereby protecting the system from an instable power source state.

On the other hand, the power source voltage may reduce on the railway vehicle under a specific condition, at a specific location, or at a specific timing. The power source voltage may reduce, for example, when apparatuses on the vehicle (for example, an engine of a train with an internal combustion engine) start operating at the same time, when the railway vehicle runs in a section where a substation is switched (a section where power is not supplied from the overhead line or a dead section), and when a slider of a pantograph (a current collector) is temporarily (momentarily) disconnected from the overheat line. At a such a time, stopping the system operation just on condition that the power source voltage reduces may lead to unnecessary deterioration of the ride comfort.

To address this problem, PTLs 1 to 3 each discuss a configuration in which, on an automobile or an electric product equipped with a battery, a state of the battery is estimated based on a time during which a voltage of the battery falls below a threshold value or an internal resistance value.
PTL 4 teaches that a carrier frequency is selected in accordance with a voltage and a presence or absence of dither-amplitude current is determined by taking a voltage into account.

### CITATION LIST

### PATENT LITERATURE

[PTL 1] JP 2004-112917
[PTL 2] JP 2009-519697
[PTL 3] JP 2013-210205
[PTL 4] JP 2014 069677 A

### SUMMARY OF INVENTION

### TECHNICAL PROBLEM

For example, in a case where the technique discussed in PTL 1 is applied to the railway vehicle, a power source abnormality may be determined despite the fact that the railway vehicle is normal as the vehicle. In this case, stopping the system (i.e., stopping the damping force control by the damping force adjustable damper) based on this determination may lead to the unnecessary deterioration of the ride comfort.

Thus an object of the present invention is to provide an actuator apparatus capable of preventing or reducing the unnecessary deterioration of the ride comfort.

### SOLUTION TO PROBLEM

This object is accomplished by the subject-matter of the independent claim. The dependent claims concern particular embodiments.

According to the present invention, the actuator apparatus can prevent or reduce the unnecessary deterioration of the ride comfort.

### BRIEF DESCRIPTION OF DRAWINGS

Fig. 1 is a side view illustrating a railway vehicle on which an actuator apparatus according to a first embodiment is mounted.
Fig. 2 is a block diagram illustrating a control device illustrated in Fig. 1 together with a battery, an acceleration sensor, and a damper.
Fig. 3 is a flowchart illustrating control processing by the control device (a microcomputer thereof) illustrated in Fig. 2.
Fig. 4 illustrates a line representing a characteristic of a first example of a temporal change in each of a voltage, a current, and a control mode.
Fig. 5 illustrates a line representing a characteristic of a second example of the temporal change in each of the voltage, the current, and the control mode.
Fig. 6 illustrates a line representing a characteristic of a third example of the temporal change in each of the voltage, the current, and the control mode.
Fig. 7 illustrates a line representing a characteristic of one example of the temporal change in each of the voltage, the current, and the control mode according to a second embodiment.
Fig. 8 illustrates a line representing a characteristic of one example of the temporal change in each of the voltage, the current, and the control mode according to a third embodiment.
Fig. 9 is a flowchart illustrating control processing by a control device (a microcomputer thereof) according to a fourth embodiment.

### DESCRIPTION OF EMBODIMENTS

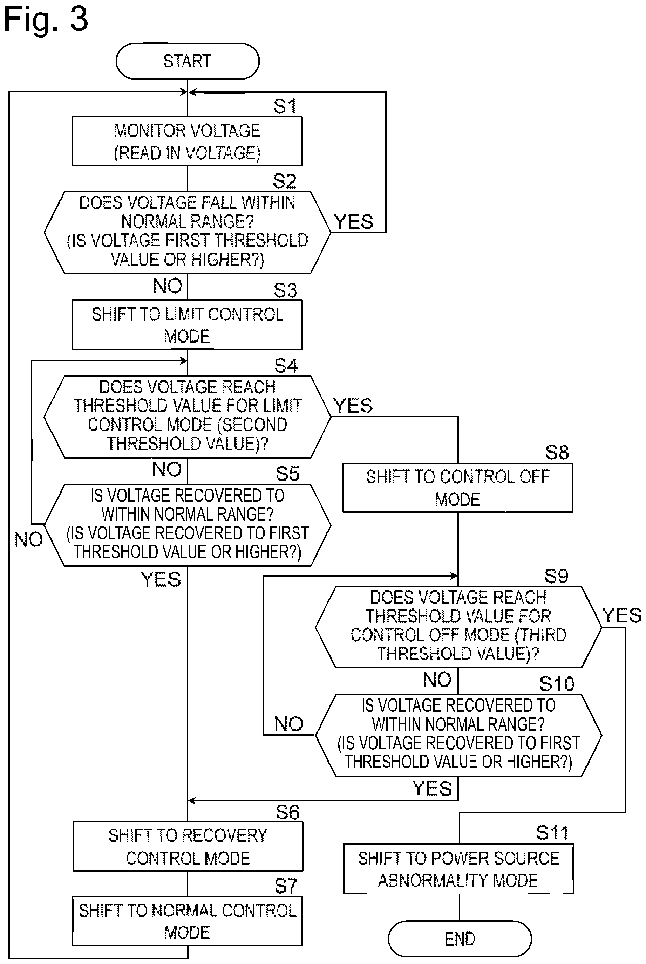

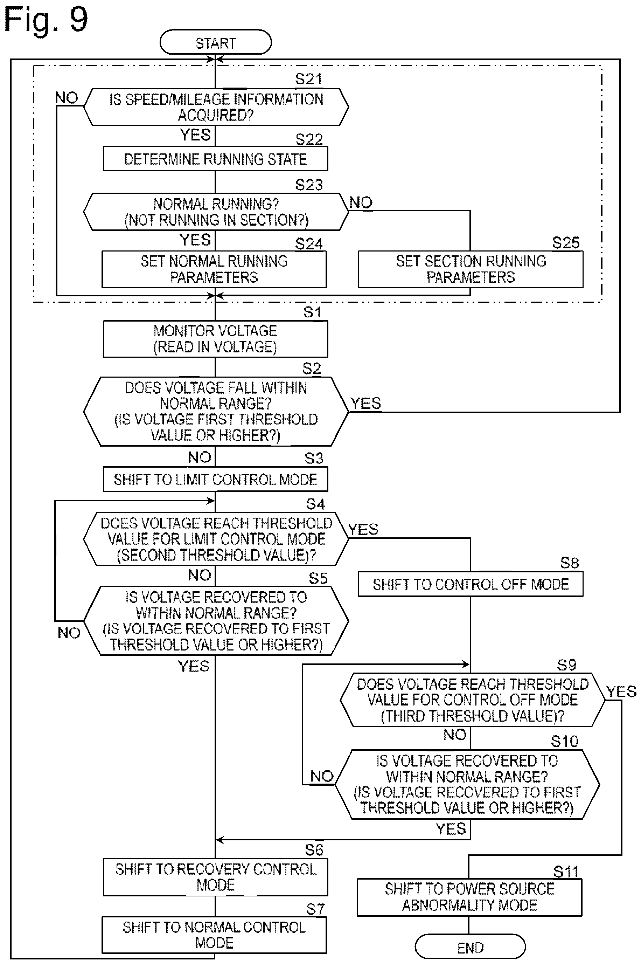

In the following description, actuator apparatuses according to embodiments will be described with reference to the accompanying drawings based on an example in which they are mounted on a railway vehicle. Individual steps in flowcharts illustrated in Figs. 3 and 9 will be each expressed with use of the symbol "S" (for example, step 1 will be expressed as "SI").

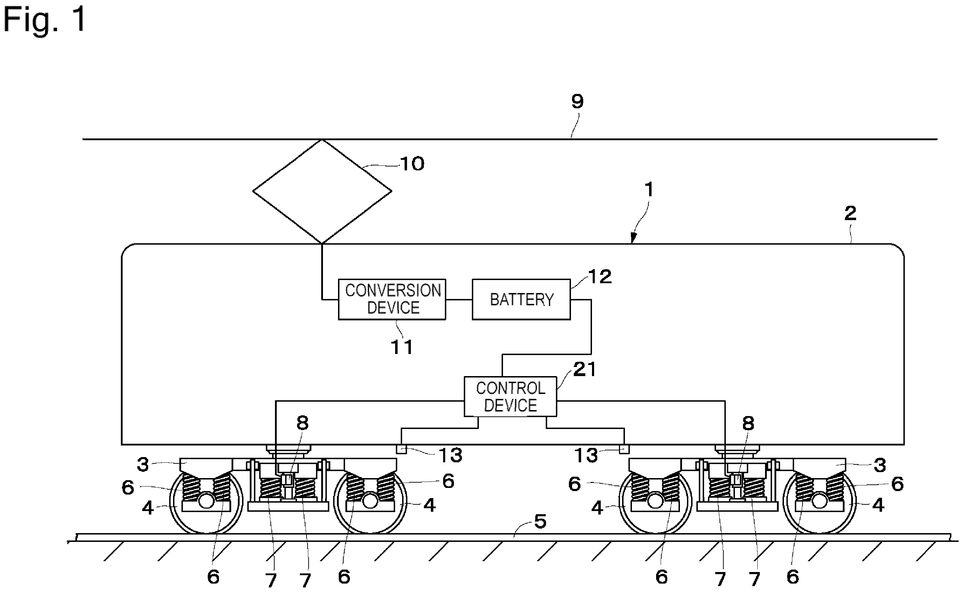

Figs. 1 to 6 illustrate a first embodiment. Referring to Fig. 1, a railway vehicle 1 includes a vehicle body 2 on which occupants such as passengers and crews are aboard (or freight is loaded), and a front-side bogie 3 and a rear-side bogie 3 disposed below the vehicle body 2. These bogies 3 are disposed so as to be spaced apart from each other on a front portion side and a rear portion side of the vehicle body 2. Due to this configuration, the vehicle body 2 of the railway vehicle 1 is mounted on the bogies 3.

The individual bogies 3 include wheels 4. More specifically, the individual bogies 3 include two sets of wheels and axles for each of them. In each of these sets, the wheels 4 are provided on both ends of the axle. Therefore, the individual bogies 3 are equipped with four wheels 4 for each of them. The individual wheels 4 rotate on left and right rails 5 (only one of them is illustrated), by which the railway vehicle 1 runs along the rails 5.

A primary spring 6 is provided between each of the bogies 3 and each of the wheels 4. The primary spring 6 damps a vibration and impact from the wheel 4 (the set of wheel and axle). On the other hand, a plurality of secondary springs 7 and a plurality of damping force adjustable dampers 8 (hereinafter referred to as dampers 8) are provided between the vehicle body 2 and each of the bogies 3. The secondary springs 7 elastically support the vehicle body 2 on each of the bogies 3. The dampers 8 are arranged so as to have a parallel relationship with each of the secondary springs 7. For example, one damper 8 is provided on each of both the left and right sides of each of the bogies 3, and four dampers 8 are provided per vehicle (per vehicle body) in total.

Each of the dampers 8 is interposed (disposed) between the vehicle body 2 corresponding to a sprung side and the bogie 3 corresponding to an unsprung side. Each of the dampers 8 generates, against a vertical vibration of the vehicle body 2 relative to the bogie 3 (a relative displacement between the vehicle body 2 and the bogie 3), a force workable to reduce the vibration (the relative displacement), i.e., a damping force. By this generation, each of the dampers 8 reduces the vertical vibration of the vehicle body 2.

In this case, the damper 8 forms a control suspension together with the secondary spring 7. More specifically, each of the dampers 8 has a damping characteristic changeable according to an instruction (an instruction value) from a control device 21, which will be described below. Therefore, each of the dampers 8 is implemented with use of, for example, a damping force adjustable hydraulic shock absorber called a semi-active damper (i.e., a damping force adjustable damper capable of controlling the damping force) as a cylinder device capable of individually adjusting the damping force of each of them.

More specifically, in the damper 8, a valve-opening pressure of a control valve (not illustrated), such as a solenoid valve, is adjusted due to supply of power (a driving current) from the control device 21. Due to this configuration, the damper 8 can adjust the damping characteristic continuously from a hard characteristic (a high characteristic) to a soft characteristic (a low characteristic). The damper 8 is not limited to being configured to continuously adjust the damping characteristic, and may be configured to be able to adjust the damping characteristic through two steps or a plurality of steps. Further, the damper 8 is not limited to the semi-active damper, and may be implemented with use of a full-active damper that adjusts the damping characteristic with the aid of external power.

In other words, in the embodiment, the damper 8 is implemented with use of the active damper that actively generates the force (the damping force), and, more specifically, the semi-active damper capable of performing semi-active control, such as the damping force adjustable shock absorber. However, the damper 8 is not limited thereto, and may be implemented with use of the full-active damper capable of performing full-active control, such as a hydraulic actuator and an electric actuator, instead of the semi-active damper.

In any case, the damper 8 serves as an actuator capable of controlling the force (the damping force) to be generated according to power supplied from an overhead line 9 serving as a power source via a battery 12. In this case, the overhead line 9 is an electric wire that supplies the power to the railroad vehicle 1, and alternating-current or direct-current power is supplied to the railway vehicle 1 via the overheat line 9. For example, the power is supplied from the overhead line 9 to the damper 8 via a pantograph 10 serving as a current collector, a conversion device 11, such as an inverter or a converter, the battery 12, and the control device 21.

For example, in a case where the railway vehicle is a train with an internal combustion engine, the actuator apparatus can be configured in such a manner that the power is supplied from a generator serving as a power source mounted on the railway vehicle to the actuator via the battery, although this example is not illustrated. Further, in the embodiment, the damper 8 as the actuator is configured as a vertically movable damper. More specifically, the embodiment indicates an example in which the actuator apparatus includes the damper 8 as the actuator disposed vertically between the vehicle body 2 and the bogie 3 and generates the force between them, thereby reducing the vertical vibration of the vehicle body 2 relative to the bogie 3.

On the other hand, the damper as the actuator may be configured as, for example, a horizontally movable damper, although this example is not illustrated. More specifically, the actuator apparatus may be configured to include an actuator disposed horizontally between the vehicle body and the bogie and generate a force between them, thereby reducing a horizontal vibration of the vehicle body relative to the bogie. Alternatively, the actuator apparatus may be configured to include an actuator disposed between the bogie and the wheel, and generate a force between them. Further alternatively, the actuator apparatus may be configured to include an actuator disposed between a vehicle body and a vehicle body (between adjacent vehicle bodies) of a railway vehicle including a plurality of vehicle bodies coupled with each other, and generate a force between them.

An acceleration sensor 13 is provided on the vehicle body 2. The acceleration sensor 13 detects a vertical vibration acceleration of the vehicle body 2 as a vehicle body acceleration. The acceleration sensor 13 serves as a state detection sensor that detects a running state of the railway vehicle 1. The acceleration sensor 13 detects the vehicle body acceleration at a position corresponding to each of the dampers 8, and outputs a detection signal therefrom to the control device 21, which will be described below. Therefore, the acceleration sensor 13 is mounted, for example, below the vehicle body 2, and, in particular, a position located around each of the dampers 8 on a bottom surface side of the vehicle body 2. The acceleration sensor 13 is provided individually in correspondence with each of the dampers 8 provided on both the front and rear sides of the vehicle, and therefore the railway vehicle 1 is configured to include four acceleration sensors 13 in total per vehicle (per vehicle body).

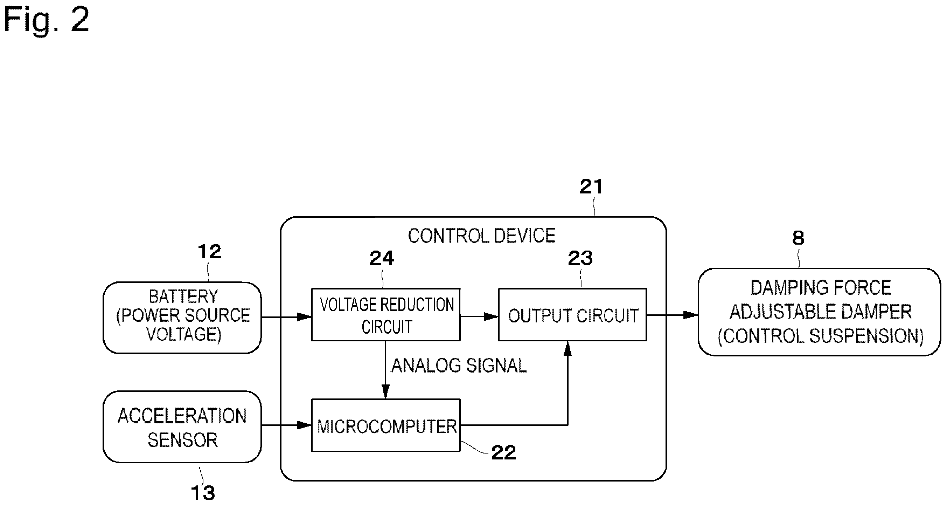

Next, the control device 21 will be described also reference to Fig. 2 in addition to Fig. 1.

The control device 21 functions to control the damping characteristic of each of the dampers 8 (a vehicle body vibration damping control device, a damper control device, or a control suspension system control device). More specifically, the control device 21 controls supply power to be supplied to the damper 8 according to the running state of the railway vehicle 1. Therefore, an input side of the control device 21 is connected to the battery 12 and the acceleration sensor 13, and an output side of the control device 21 is connected to the control valve (for example, the solenoid of the solenoid valve) of the damper 8. The control device 21 includes a micro-computer 22 (hereinafter referred to as a microcomputer 22). The microcomputer 22 includes a memory embodied by, for example, a ROM, a RAM, an EEPROM, or a flash memory, a CPU serving as an arithmetic processing unit, an A/D converter that converts an analog signal to a digital signal, and the like. As illustrated in Fig. 2, the acceleration sensor 13 is connected to the microcomputer 22.

The memory of the microcomputer 22 stores therein an arithmetic equation determined based on various kinds of control laws such as the Skyhook control, the H 00 control, and the LQG control, and a preset parameter such as a control gain for executing this arithmetic equation. Further, the memory of the microcomputer 22 also stores therein a processing program for performing a processing flow illustrated in Fig. 3, which will be described below.

The microcomputer 22 (the CPU thereof) calculates the control instruction for damping the vibration of the vehicle body 2 based on the acceleration detected by the acceleration sensor 13, and the arithmetic equation and the parameter. For example, in the case where the damper 8 is the solenoid-type control damper, the microcomputer 22 calculates a target current value corresponding to the damping force that should be generated by the damper 8 as the control instruction. The microcomputer 22 outputs the calculated control instruction (the target current value) to an output circuit 23 serving as a current output circuit. As a result, a current according to the control instruction is supplied to the damper 8 (the solenoid thereof) via the output circuit 23. In other words, the damper 8 can damp the vibration of the vehicle body 2 by generating the force (the damping force) according to the current supplied via the output circuit 23.

In this manner, in the embodiment, the acceleration of the vehicle body 2 is detected by the acceleration sensor 13. The control device 21 (the microcomputer 22 thereof) calculates a damping force optimum for control of ride comfort on the vehicle according to the detected acceleration and the specific control law, thereby controlling the damper 8 via the output circuit 23. In the embodiment, the damper 8 has such a characteristic that a damping force corresponding to an intermediate current value is generated when the current is 0 A, including when a failure has occurred (when the control is stopped). Further the solenoid-type control damper is used in the embodiment, but a control damper other than the solenoid-type control damper may be used. Further, the actuator apparatus employs the acceleration sensor 13 that detects the acceleration of the vertical vibration as the state detection sensor that detects the running state of the railway vehicle 1, but can employ various kinds of running state detection sensors, such as a vehicle height sensor, a speed sensor, a tilt sensor, an angular speed sensor, and a combination sensor that detects three-axis accelerations and three-axis angular speeds.

Now, the power is supplied from the overhead line or the generator mounted on the railway vehicle to the control suspension system of the railway vehicle. One possible configuration in this case is that the control suspension system is configured to monitor a voltage value of the power source supplied to the control suspension system, thereby protecting the system from an instable power source state. A possible operation thereof is, for example, to detect the voltage value of the power source by a voltage reduction detection IC and stop the system operation when detecting a reduction in the voltage, thereby preventing or reducing an instable operation in a low-voltage state.

However, the power source voltage may reduce on the railway vehicle under a specific condition, at a specific location, or at a specific timing. More specifically, the power source voltage may reduce, for example, when apparatuses on the vehicle (for example, an engine of the train with an internal combustion engine) start operating at the same time, when the railway vehicle runs in a section where a substation is switched (a section where power is not supplied from the overhead line or a dead section), and when a slider of the pantograph (the current collector) is temporarily (momentarily) disconnected from the overheat line. At a such a time, if the voltage reduction detection IC stops the system operation just on condition that the power source voltage reduces, this stop may lead to unnecessary deterioration of the ride comfort.

To address this problem, the above-described patent literatures, PTLs 1 to 3 each discuss the configuration in which, on the automobile or the electric product equipped with the battery, the state of the battery is estimated based on the time during which the voltage of the battery falls below the threshold value or the internal resistance value. For example, an alternator control apparatus discussed in PTL 1 estimates a discharge current of the battery, sets an optimum threshold value for voltage reduction detection based thereon, and determines a low-charged state if the battery voltage falls below this set threshold value for a predetermined time.

Then, what may happen when this technique is applied to the railway vehicle will be described now. Examples of possible implementation in this case include configuring the control suspension system to preform shock prevention control (control of the damping force of the damping force adjustable damper) in a state where the power source is normal, and stop the shock prevention control in an abnormal state (for example, a state where the power source voltage reduces). However, in the case of the railway vehicle, there are mixed many factors for the voltage reduction, such as the reduction in the voltage when the railway vehicle is running in the section, the temporary (momentary) reduction in the voltage due to the disconnection of the pantograph (the slider thereof) while the railway vehicle is running, and a reduction in the voltage accompanying a startup of a vehicle engine.

For example, focusing on the section, it takes a different time to pass through the section depending on a difference in a length per section and a running speed when the railway vehicle passes through the section. Therefore, just setting one threshold value is not sufficient to support all of them, and, for example, may result in an incorrect determination of a power source abnormality despite the fact that the railway vehicle is normal as the vehicle. In this case, stopping the system (i.e., stopping the control of the damping force of the damping force adjustable damper) based on this determination may lead to the unnecessary deterioration of the ride comfort. On the other hand, conversely, absence of the power source abnormality may be determined even when the power source abnormality has occurred actually. In this case, the actuator apparatus may fail to start processing that should be performed at the time of the power source abnormality (for example, fail-safe processing).

Under these circumstances, in the embodiment, the actuator apparatus is configured to be able to ensure excellent ride comfort as much as possible against the voltage reductions specific to the railway vehicle 1. Therefore, in the embodiment, the actuator apparatus includes a detector that detects a voltage of the battery 12. More specifically, the control device 21 includes a voltage reduction circuit 24 as the detector that detects the voltage of the battery 12. The voltage reduction circuit 24 includes, for example, an operational amplifier or the like, and the power supplied from the battery 12 to the control device 21 is input to the voltage reduction circuit 24. The voltage reduction circuit 24 generates an analog signal proportional to the power source voltage, and inputs this signal to the A/D converter of the microcomputer 22. Due to this configuration, the microcomputer 22 can monitor the power source voltage supplied from the battery 12 in real time.

Now, in the case of the railway vehicle 1, which is a commonly-used railway vehicle, DC 100 V (DC 24 V in the case of the train with an internal combustion engine) is supplied from an auxiliary power source to the control suspension. This power source is supported by battery backup by the battery 12 and therefore is an uninterruptible power voltage, which allows a voltage change to be basically kept small even when a voltage of a main power source reduces due to the passage through the dead section or the common disconnection of the pantograph. However, a considerable voltage reduction may occur according to specifications of the vehicle, deterioration over time, or the like.

On the other hand, in the embodiment, the control device 21 monitors the power source voltage supplied from the battery 12, and performs limit control of limiting the output without immediately turning off the control when the power source voltage falls below a threshold value (for example, a first threshold value Vb). The control device 21 gradually lifts the limit if the power source voltage is recovered during the limit control, but turns off the control in consideration of a possibility of the abnormality in the power source if the power source voltage is not recovered within a predetermined time (for example, even after a predetermined time tb has passed). The control device 21 gradually lifts the limit if the power source voltage is recovered while the control is turned off, but determines that the abnormality has occurred in the power source and stops the control if the power source voltage is not recovered even after a predetermined time (for example, a predetermined time tc) has passed after the control is turned off.

Due to this control, on the railway vehicle 1 where the voltage reduction occurs under various conditions, the actuator apparatus can ensure a certain shock prevention performance (a vibration damping performance) even when the power source voltage reduces. Further, if the reduction in the power source voltage is not a temporary reduction and the abnormality has occurred in the power source, the actuator apparatus can stop the control to ensure safety (for example, ensure running stability) while reducing a load on the power source. This allows the actuator apparatus to construct a control suspension system capable of, while maintaining excellent ride comfort under a wider range of situations than the conventional technique, also achieving further high safety.

Fig. 3 illustrates control processing performed by the control device 21 (the microcomputer 22 thereof). The microcomputer 22 of the control device 21 monitors the power source voltage (the voltage of the battery 12) according to the analog signal (the voltage signal) acquired from the voltage pressure circuit 24, and shifts to a limit control mode if the voltage deviates from a normal range. The microcomputer 22 of the control device 21 returns from a recovery control mode to a normal control mode if the voltage is recovered within a predetermined time, and otherwise shifts to a control OFF mode. The microcomputer 22 of the control device 21 determines the power source abnormality and shifts to a power source abnormality mode (stops the operation) if the voltage is not recovered even after that.

More specifically, when the control processing illustrated in Fig. 3 is started by powering on (starting the power supply to) the control device 21 (the microcomputer 22 thereof), in S1, the microcomputer 22 of the control device 21 monitors the power source voltage. More specifically, in S1, the microcomputer 22 of the control device 21 reads in the voltage of the battery 12 (the power source voltage), i.e., the voltage of the power supplied from the battery 12 to the output circuit 23 of the control device 21 based on the signal (the analog signal) output from the voltage reduction circuit 24. In a subsequent step, S2, the microcomputer 22 of the control device 21 determines whether the voltage read in S1 falls within the normal range. In other words, the microcomputer 22 of the control device 21 determines whether the voltage is equal to or higher than the first threshold value Vb. If "YES" is determined in S2, i.e., the voltage is determined to fall within the normal range (to be equal to or higher than the first threshold value Vb), the flow returns to before S1, and repeats the processing in S1 and steps subsequent thereto.

On the other hand, if "NO" is determined in S2, i.e., the voltage is determined not to fall within the normal range (to fall below the first threshold value Vb), the flow proceeds to S3. In S3, the microcomputer 22 of the control device 21 shifts to the limit control mode. In the limit control mode, the microcomputer 22 of the control device 21 starts control of reducing the supply power directed to the damper 8, i.e., limit control of reducing the supply power compared to when the voltage falls within the normal range. More specifically, when the voltage falls below the first threshold value Vb, the microcomputer 22 of the control device 21 limits a maximum current value (an output current limit value) Imax directed to the damper 8 to a maximum current value Imax2, which is a lower value than a maximum current value Imax1 employed when the voltage does not fall below the first threshold value Vb. In this case, the microcomputer 22 of the control device 21 does not instantaneously reduce the maximum current value Imax from the maximum current value Imax1 to the maximum current value Imax2, and, for example, gradually reduces it as time passes (for example, at a preset predetermined change rate). The change rate (a change amount) at which the maximum current value is reduced can be set in advance based on an experiment, a calculation, a simulation, or the like so as to, for example, prevent the damping force of the damper 8 from excessively changing (so as to prevent the ride comfort from suddenly changing). For example, the maximum current value Imax can be reduced so as to match Imax2 corresponding to the intermediate current value when a first predetermined time tb has passed since the reduction to lower than the first threshold value Vb.

After the microcomputer 22 of the control device 21 starts the limit control in S3 (= after the voltage falls below the first threshold value Vb), i.e., the microcomputer 22 of the control device 21 starts to reduce the maximum current value Imax toward the maximum current value Imax2, the flow proceeds to S4. In S4, the microcomputer 22 of the control device 21 determines whether the voltage reaches a threshold value for the limit control mode. More specifically, the microcomputer 22 of the control device 21 determines whether the first predetermined time tb has passed since the start of the limit control (since the reduction in the voltage to lower than the first threshold value Vb). The first predetermined time tb is a value for determining whether to shift to the control OFF mode, i.e., whether to set the supply power directed to the damper 8 to 0 A. The first predetermined time tb can be set in advance based on an experiment, a calculation, a simulation, or the like so as to, for example, allow the supply power directed to the damper 8 to be set to 0 A at an appropriate timing in consideration of the possibility of the abnormality in the power source.

The threshold value for the limit control mode may be set as, for example, a second threshold value that is a value for determining the voltage detection value, besides being set as the time (the first predetermined time tb) elapsed since the reduction to lower than the first threshold value Vb. Assuming that Vc represents a minimum voltage value that keeps the system operable (for example, a minimum voltage value that keeps sustainable the control of the damping force of the damper 8), the second threshold value can be set to a voltage value between the minimum voltage value Vc and the first threshold value Vb (a voltage value higher than the minimum voltage value Vc and lower than the first threshold value Vb). In this case, the voltage value serving as the second threshold value (a voltage determination value) can also be set in advance based on an experiment, a calculation, a simulation, or the like so as to, for example, allow the supply power directed to the damper 8 to be set to 0 A at an appropriate timing in consideration of the possibility of the abnormality in the power source.

If "NO" is determined in S4, i.e., the voltage is determined not to reach the threshold value for the limit control mode (the first predetermined time tb has not passed since the start of the shift to the limit control mode), the flow proceeds to S5. In S5, the microcomputer 22 of the control device 21 determines whether the voltage is recovered to within the normal range. More specifically, in S5, the microcomputer 22 of the control device 21 determines whether the voltage acquired based on the analog signal from the voltage reduction circuit 24 falls within the normal range. In other words, the microcomputer 22 of the control device 21 determines whether the voltage is recovered to the first threshold value Vb or higher. Between S4 and S5, the microcomputer 22 of the control device 21 performs processing for reading in the voltage (processing for reading in the voltage similar to S1), but Fig. 3 illustrates the flowchart, omitting this processing.

If "NO" is determined in S5, i.e., the voltage is determined not to be recovered to the first threshold value Vb or higher, the flow returns to before S4, and repeats the processing in S4 and steps subsequent thereto. On the other hand, if "YES" is determined in S5, i.e., the voltage is determined to be recovered to the first threshold value Vb or higher, the flow proceeds to S6. In S6, the microcomputer 22 of the control device 21 shifts to the recovery control mode. In the recovery control mode, the microcomputer 22 of the control device 21 starts the recovery control of changing the supply power directed to the damper 8 to the supply power employed when the voltage falls within the normal range (when the voltage detection value does not fall below the first threshold value Vb). More specifically, after the voltage is recovered to the first threshold value Vb or higher, the microcomputer 22 of the control device 21 increases the maximum current value Imax directed to the damper 8 to the maximum current value Imax1. In this case, the microcomputer 22 of the control device 21 does not instantaneously increase the maximum current value Imax to the maximum current value Imax1, and, for example, gradually increases it as time passes (at a preset predetermined change rate). The change rate (a change amount) at which the maximum current value is increased can be set in advance based on an experiment, a calculation, a simulation, or the like so as to, for example, prevent the damping force of the damper 8 from excessively changing (so as to prevent the ride comfort from suddenly changing). For example, the maximum current value Imax can be increased so as to match Imax1 when a second predetermined time ta has passed since the increase in the voltage to the first threshold value Vb or higher.

In S7 subsequent to S6, the microcomputer 22 of the control device 21 shifts to the normal control mode (a regular control mode). In the normal control mode, the microcomputer 22 of the control device 21 sets the maximum current value Imax directed to the damper 8 to the maximum current value Imax1 employed when the voltage falls within the normal range. Then, the flow returns to before step S1 and repeats the processing in S1 and the steps subsequent thereto.

If "YES" is determined in S4, i.e., the voltage is determined to reach the threshold value for the limit control mode (the first predetermined time tb has passed since the start of the shift to the limit control mode), the flow proceeds to S8. In S8, the microcomputer 22 of the control device 21 shifts to the control OFF mode. In the control OFF mode, the microcomputer 22 of the control device 21 sets the supply power directed to the damper 8 to 0. More specifically, when the first predetermined time tb has passed since the start of the shift to the limit control mode, the microcomputer 22 of the control device 21 changes the maximum current value Imax directed to the damper 8 from Imax2 to 0 A. At this time, the damper 8 exhibits the damping force characteristic corresponding to the intermediate current value (i.e., a performance corresponding to a passive damper). When shifting to the control OFF mode, the microcomputer 22 of the control device 21 can immediately reduce the maximum current value Imax from Imax2 to 0 A. In this case, Imax2 can be set to a value corresponding to the intermediate current value.

After the microcomputer 22 of the control device 21 shifts to the control OFF mode in S8 (after the microcomputer 22 of the control device 21 sets the maximum current value Imax to 0 A), the flow proceeds to S9. In S9, the microcomputer 22 of the control device 21 determines whether the voltage reaches a threshold value for the control OFF mode. More specifically, the microcomputer 22 of the control device 21 determines whether a third predetermined time tc has passed since the shift to the control OFF mode (since the setting of the maximum current value Imax to 0 A). The third predetermined time tc is a value for determining whether to shift from the control OFF mode to the power source abnormality mode, i.e., whether to stop the control of the damper 8. While returning to the normal control mode via the recovery control mode when the voltage is recovered to the first threshold value Vb or higher in the control OFF mode, the microcomputer 22 of the control device 21 does not return to the normal control mode even when the voltage is recovered to the first threshold value Vb or higher in the power source abnormality mode (the control of the damper 8 is stopped). The third predetermined time tc can be set in advance based on an experiment, a calculation, a simulation, or the like so as to, for example, allow the power source abnormality to be accurately determined, i.e., allow the control of the damper 8 to be stopped at an appropriate timing.

If "NO" is determined in S9, i.e., the voltage is determined not to reach the threshold value for the control OFF mode (the third predetermined time tc has not passed since the start of the shift to the control OFF mode), the flow proceeds to S10. In S10, the microcomputer 22 of the control device 21 determines whether the voltage is recovered to within the normal range. More specifically, in S10, the microcomputer 22 of the control device 21 determines whether the voltage acquired based on the analog signal from the voltage reduction circuit 24 falls within the normal range. In other words, the microcomputer 22 of the control device 21 determines whether the voltage is recovered to the first threshold value Vb or higher. Between S9 and S10, the microcomputer 22 of the control device 21 performs processing for reading in the voltage (processing for reading in the voltage similar to S1), but Fig. 3 illustrates the flowchart, omitting this processing.

If "NO" is determined in S10, i.e., the voltage is determined not to be recovered to the first threshold value Vb or higher, the flow returns to before S9, and repeats the processing in S9 and steps subsequent thereto. On the other hand, if "YES" is determined in S10, i.e., the voltage is determined to be recovered to the first threshold value Vb or higher, the flow proceeds to S6. In other words, the microcomputer 22 of the control device 21 shifts to the recovery control mode in S6 and shifts to the normal control mode (the regular control mode) in S7, and repeats the processing in S1 and the steps subsequent thereto.

On the other hand, if "YES" is determined in S9, i.e., the voltage is determined to reach the threshold value for the control OFF mode (the third predetermined time tc has passed since the start of the shift to the control OFF mode), the flow proceeds to S11. In S11, the microcomputer 22 of the control device 21 shifts to the power source abnormality mode. In the power source abnormality mode, the microcomputer 22 of the control device 21 stops the control of the damper 8. In this power source abnormality mode, the microcomputer 22 of the control device 21 does not return to the normal control mode even when the voltage is recovered to the first threshold value Vb or higher after that. In other words, after the microcomputer 22 of the control device 21 shifts to the power source abnormality mode in S11, the flow proceeds to the end. In this case, the microcomputer 22 of the control device 21 does not perform the control until the actuator apparatus (the control suspension system) is started up again. For example, when the control device 21 is started up again, the microcomputer 22 of the control device 21 starts the processing in S1 from the start.

In this manner, when the voltage detection value acquired via the voltage reduction circuit 24 as the detector falls below the first threshold value Vb by the processing in S1 and S2, the control device 21 (the microcomputer 22 thereof) performs the limit control of reducing the supply power directed to the damper 8 compared to when the voltage detection value does not fall below the first threshold value Vb by the processing in S3. In other words, when the voltage from the battery 12 to the control device 21 falls below the first threshold value Vb, the microcomputer 22 of the control device 21 shifts to the limit control mode of limiting the maximum current value Imax directed to the damper 8 to the maximum current value Imax2, which is the lower value than the maximum current value Imax1 employed when the voltage does not fall below the first threshold value Vb.

Examples of the reduction in the voltage, i.e., when the voltage detection value falls below the first threshold value Vb include the voltage reduction due to the passage through the section of the overhead line 9 (the passage through the dead section), and the voltage reduction of the generator in the case where the railway vehicle 1 is the train with an internal combustion engine. Further, in the limit control (the limit control mode), the microcomputer 22 of the control device 21 gradually reduces the supply power directed to the damper 8. More specifically, the microcomputer 22 of the control device 21 gradually reduces the maximum current value Imax directed to the damper 8 from the maximum current value Imax1 (at the preset predetermined change rate) when the voltage falls below the first threshold value Vb.

Further, when detecting the value exceeding the first threshold value Vb by the processing in S5 during the limit control, i.e., after the voltage detection value falls below the first threshold value Vb, the control device 21 (the microcomputer 22 thereof) performs the recovery control of changing the supply power directed to the damper 8 closer to the supply power employed when the voltage detection value does not fall below the first threshold value Vb by the processing in S6. In other words, when the voltage from the battery 12 to the control device 21 exceeds the first threshold value Vb from the state lower than the first threshold value Vb, the microcomputer 22 of the control device 21 shifts to the recovery control mode of changing the maximum current value Imax directed to the damper 8 closer to the maximum current value Imax1 employed when the voltage does not fall below the first threshold value Vb. In this case, that is, the microcomputer 22 of the control device 21 gradually changes the supply power directed to the damper 8 closer to the supply power employed when the voltage detection value does not fall below the first threshold value Vb in the recovery control (the recovery control mode). In other words, when the voltage exceeds the first threshold value Vb, the microcomputer 22 of the control device 21 gradually increases the maximum current value Imax directed to the damper 8 to the maximum current value Imax1 (at the preset predetermined change rate).

Further, when the predetermined time (the first predetermined time tb) has passed since the reduction in the voltage detection value acquired via the voltage reduction circuit 24 to lower than the first threshold value Vb during the limit control by the processing in S4, the control device 21 (the microcomputer 22 thereof) sets the supply power directed to the damper 8 to zero by the processing in S8. In other words, when the first predetermined time tb has passed since the reduction in the voltage from the battery 12 to the control device 21 to lower than the first threshold value Vb, the microcomputer 22 of the control device 21 shifts to the control OFF mode of setting the maximum current value Imax directed to the damper 8 to 0 A. The shift to the control OFF mode (whether to set the maximum current value Imax to 0 A) can also be determined based on the voltage detection value. More specifically, the control device 21 (the microcomputer 22 thereof) may set the supply power directed to the damper 8 to zero (the maximum current value Imax to 0 A) when the voltage detection value acquired via the voltage reduction circuit 24 falls below the second threshold value lower than the first threshold value Vb.

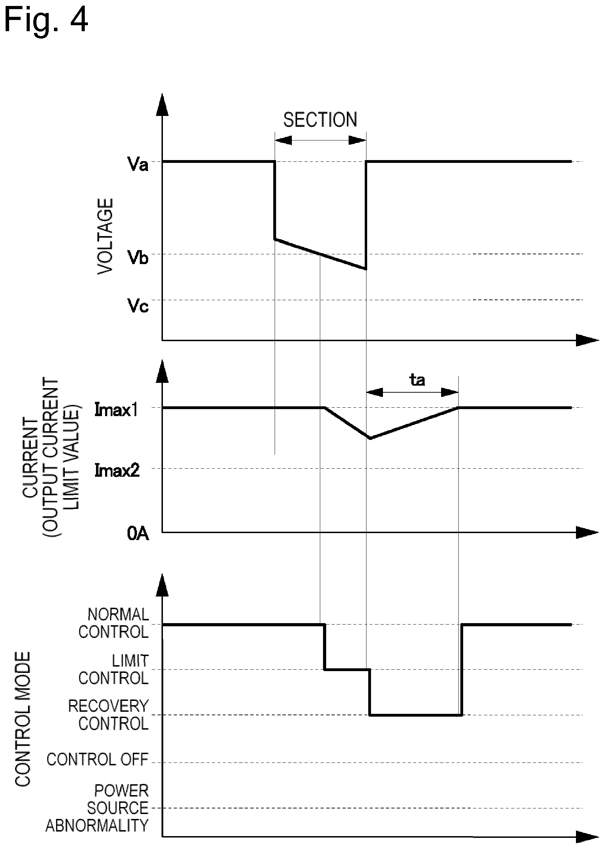

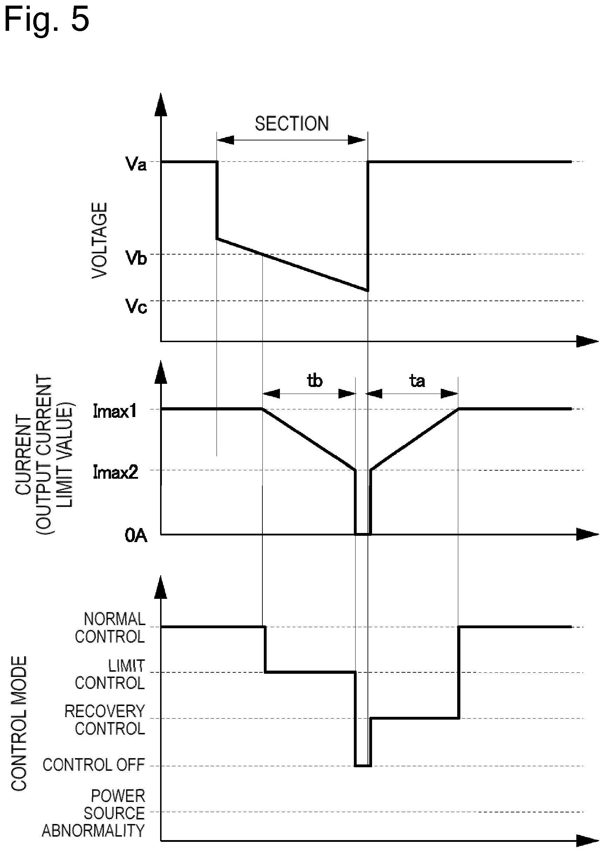

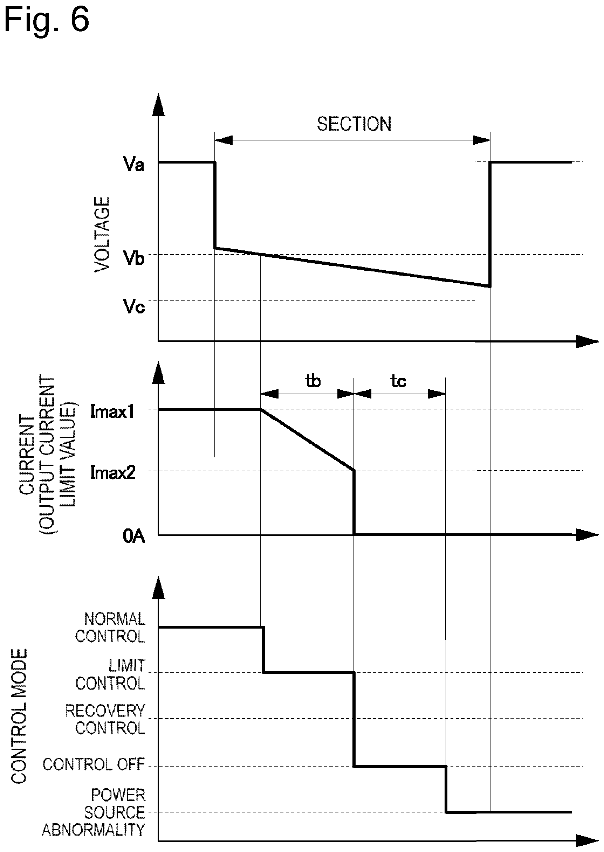

The actuator apparatus according to the first embodiment is configured in the above-described manner, and an operation thereof will be described with reference to Figs. 4 to 6 next. Now, Figs. 4 to 6 each illustrate examples of temporal changes in the voltage, the current (the output current limit value or the maximum current value), and the control mode. Further, in Figs. 4 to 6, Va represents the power source voltage at the time of the normal operation (for example, approximately 100 V), Vb represents the first threshold value, which is the threshold value for detecting the voltage reduction (for example, approximately 70 V), Vc represents the minimum voltage value that keeps the system operable (for example, approximately 55 V), Ta represents the second predetermined time, which is the time taken to lift the limit when the voltage is recovered (for example, approximately 3 seconds), Imax1 represents the current upper limit value at the time of the normal operation (for example, approximately 1.6 A), and Imax2 represents the current value that leads to the damping force equivalent to the damping force under 0 A (for example, approximately 0.9 A). Further, in Fig. 5, tb represents the first predetermined time, which is the time taken since the start of the limit control until the shift to the control OFF mode (approximately 1 to 2 seconds). Further, in Fig. 6, tc represents the third predetermined time, which is the time taken since the shift to the control OFF mode until the shift to the power source abnormality mode (approximately 1 to 2 seconds).

First, Fig. 4 illustrates the operation when the actuator apparatus shifts to the limit control mode due to the voltage reduction, but does not reach the control OFF mode. The actuator apparatus converts the power source voltage (the voltage from the battery 12) into the analog signal by the voltage reduction circuit 24, and monitors it by the microcomputer 22. When the power source voltage, which is normally kept at Va, matches or falls below the threshold value Vb, i.e., the first threshold value Vb due to the passage through the dead section, the power source abnormality, or the like, the actuator apparatus shifts to the limit control mode. In the limit control mode, the actuator apparatus imposes the limit value Imax on the current to be output to the damper 8 and gradually reduces the limit value as time passes while performing the limitative control to ease the load on the battery 12 of the vehicle and ensure the safety in the voltage-reduced state. In other words, the actuator apparatus gradually reduces the limit value Imax, which is the maximum current value, from Imax1 to Imax2. Then, if the power source voltage is recovered to Vb or higher before the limit value reaches Imax2 (= before the first predetermined time tb as the set time has passed), the actuator apparatus shifts to the recovery control mode and recovers the output current limit value Imax to Imax1 employed at the time of the normal operation, spending the second predetermined time ta as the set time, and then returns to the normal control mode after that.

Next, Fig. 5 illustrates the operation when the actuator apparatus shifts to the control OFF mode after shifting to the limit control mode due to the voltage reduction, but does not reach the power source abnormality mode. The actuator apparatus shifts to the control OFF mode if the power source voltage value is not recovered to Vb or higher until the first predetermined time tb as the set time has passed and the current limit value reaches Imax2 after the shift to the limit control mode. In the control OFF mode, the actuator apparatus places further importance on the safety, and fixes the output current to 0 A. If the power source voltage is recovered to Vb or higher before the third predetermined time tc as the set time has passed after the shift to the control OFF mode, the actuator apparatus shifts to the recovery control mode. More specifically, the actuator apparatus returns to the normal control mode after recovering the output current limit from Imax2 corresponding to 0 A to Imax1 employed at the time of the normal operation, spending the predetermined time ta. The damping force characteristic of the control damper at the threshold value Imax2 is approximately equal to the damping force characteristic when the current is 0 A.

Next, Fig. 6 illustrates the operation when the actuator apparatus shifts from the limit control mode to the power source abnormality mode via the control OFF mode due to the voltage reduction. If the power source voltage value is not recovered to Vb or higher even after the third predetermined time tc as the set time has passed after the shift to the control OFF mode, the actuator apparatus determines that the power source abnormality has occurred, thereby shifting to the power source abnormality mode. In the power source abnormality mode, estimating that a serious problem has occurred with the power source, the actuator apparatus keeps the control turned off, and, for example, does not turn on the control even if the power source voltage is recovered to Vb or higher and refrains from performing the control until the actuator apparatus (the control suspension system) is started up again.

In this manner, according to the first embodiment, the actuator apparatus returns to the normal control as soon as the voltage is recovered while performing the limitative control (the control of reducing the output current limit and the control of setting the current to 0 A) because placing importance on the safety, with respect to the reduction in the power source voltage that lasts for a short time to an intermediate time due to the passage through the section, the disconnection of the pantograph, or the like. Therefore, the actuator apparatus can improve the ride comfort and the running stability. On the other hand, when the power source abnormality has truly occurred, the actuator apparatus stops the operation to ensure the safety (to impede development of the power source abnormality due to continuation of the control) after performing the limitative control (the control of reducing the output current limit and the control of setting the current to 0 A) for the set time. Now, when the output current is 0, and when the operation is stopped, the damper 8 exhibits the performance corresponding to the passive damper. As a result, the actuator apparatus can construct a control suspension system capable of achieving both the ride comfort and the safety (a stop of the development of the abnormality) optimum for the situation at that time under various power source states.

In this manner, according to the first embodiment, if "YES" is determined in S2 because the voltage detection value falls below the first threshold value Vb, the actuator apparatus performs the limit control of reducing the supply power directed to the damper 8 compared to when the voltage detection value does not fall below the first threshold value Vb by the processing in S3. At this time, the actuator apparatus can continue the control of the damper 8 (the vibration damping control) without stopping it by reducing the supply power directed to the damper 8 without setting it to zero. More specifically, the actuator apparatus can continue the power supply to the damper 8 even when the voltage detection value reduces by setting the first threshold value Vb as the determination value for determining that the supply power directed to the damper 8 should reduce although it does not have to reduce to as far as zero. Due to this configuration, the actuator apparatus can continue the control of the damper 8 compared to a configuration that sets the supply power directed to the damper to zero when the voltage detection value reduces. As a result, the actuator apparatus can prevent or reduce the unnecessary deterioration of the ride comfort.

In the first embodiment, if "YES" is determined in S5 or S10 because the voltage detection value exceeds the first threshold value Vb from the state lower than the first threshold value Vb, the actuator apparatus performs the recovery control of changing the supply power directed to the damper 8 closer to the supply power employed when the voltage detection value does not fall below the first threshold value Vb by the processing in S6. Due to this configuration, the control of the damper 8 is recovered to the control employed when the voltage does not fall below the first threshold value Vb. Therefore, the actuator apparatus can improve the ride comfort compared to the configuration that sets the supply power directed to the damper to zero when the voltage detection value reduces and continuously keeps the supply power in the zero state.

In the first embodiment, the actuator apparatus gradually changes the supply power directed to the damper 8 to the supply power employed when the voltage does not below the first threshold value Vb by the processing in S6, thereby being able to gradually recover the control of the damper 8. Therefore, the actuator apparatus can prevent or reduce the sudden change in the ride comfort, thereby also improving the ride comfort as a result of this effect.

In the first embodiment, if "YES" is determined in S4 because the first predetermined time tb has passed since the reduction in the voltage detection value to lower than the first threshold value Vb, the supply power directed to the damper 8 is set to zero by the processing in S8. Due to this configuration, the actuator apparatus can set the supply power directed to the damper 8 to zero when the supply power directed to the damper 8 should be set to zero. In other words, the actuator apparatus can set the supply power directed to the damper 8 to zero when necessary by setting the first predetermined time tb as the determination value for determining that the supply power should be set to zero.

In the first embodiment, the damper 8 as the actuator is the damping force adjustable damper, and therefore the actuator apparatus can adjust the damping force according to the supply power.

In this manner, in the first embodiment, the actuator apparatus can improve the ride comfort and the running safety in a wide range of power source states. Further, the actuator apparatus can prevent or reduce the sudden deterioration of the ride comfort when the power source voltage reduces. Further, the actuator apparatus becomes able to be flexibly applied according to power source specifications for each vehicle. Further, the actuator apparatus can improve noise tolerance of the system (the control suspension system).

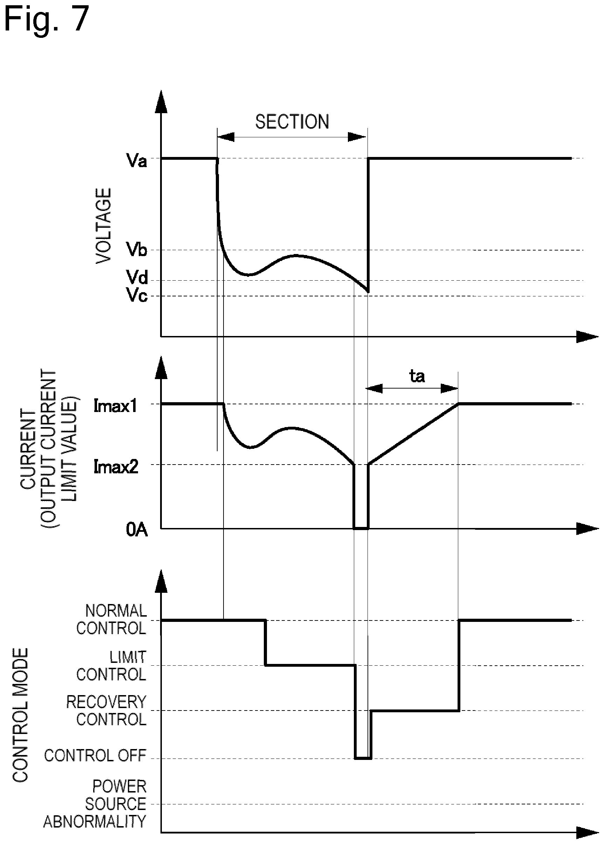

Fig. 7 illustrates a second embodiment. The second embodiment is characterized by being configured to reduce the output current limit value Imax according to the change in the power source voltage value and also set the supply power to zero if the power source voltage value falls below the second threshold value. The second embodiment will be described, indicating similar components to the first embodiment by the same reference numerals and omitting descriptions thereof.

In the limit control mode according to the above-described first embodiment, the actuator apparatus is configured to reduce the maximum current value Imax serving as the output current limit value as time passes. In other words, in the first embodiment, when the voltage falls below the first threshold value Vb, the actuator apparatus reduces the maximum current value Imax at the predetermined change rate (change amount) (more specifically, reduces the maximum current value Imax in such a manner that the maximum current value Imax matches Imax2 when the first predetermined time t2 has passed). Further, in the limit control mode according to the first embodiment, the actuator apparatus sets the current value to 0 A when the first predetermined time tb has passed since the reduction to lower than the first threshold value Vb.

On the other hand, in a limit control mode according to the second embodiment, the actuator apparatus changes the supply power directed to the damper 8 according to the voltage detection value acquired via the voltage reduction circuit 24 as illustrated in Fig. 7. More specifically, in the limit control mode according to the second embodiment, the actuator apparatus reduces the maximum current value Imax according to the power source voltage value. Further, when the power source voltage value falls below the second threshold value Vd, the actuator apparatus sets the supply power to zero. In sum, in the second embodiment, the actuator apparatus changes the maximum current value Imax according to the change in the power source voltage value until the voltage falls below the second threshold value Vd, when the voltage falls below the first threshold value Vb. At this time, a reduction in the power source voltage value also leads to a reduction in the maximum current value Imax, and an increase in the power source voltage value also leads to an increase in the maximum current value Imax.

Fig. 7 illustrates the operation when the actuator apparatus shifts to the control OFF mode after shifting to the limit control mode due to the voltage reduction, but does not reach the power source abnormality mode. In Fig. 7, Vd represents the second threshold value, which is the threshold value for shifting to the control OFF. When the power source voltage, which is normally kept at Va, matches or falls below the threshold value Vb, i.e., the first threshold value Vb due to the passage through the dead section, the power source abnormality, or the like, the actuator apparatus shifts to the limit control mode. In the limit control mode, the current limit value Imax is changing according to the power source voltage value, and the actuator apparatus shifts to the control OFF mode when the power source voltage falls below the second threshold value Vd. Therefore, when the power source voltage value is less affected as the voltage value, such as when the power source voltage value is kept right below the first threshold value Vb for a long time, the actuator apparatus can avoid the control from being turned off.

The second embodiment is configured to reduce the supply power directed to the damper 8 by the limit control workable as described above, and a basic operation thereof is not especially different from the operation according to the first embodiment. Especially, in the second embodiment, the actuator apparatus changes the supply power directed to the damper 8 according to the change in the power source voltage value, and also sets the supply power to zero when the voltage detection value falls below the second threshold value Vd lower than the first threshold value Vb. More specifically, the actuator apparatus reduces the output current limit value Imax directed to the damper 8 according to the change in the power source voltage value, and also sets the supply power to zero when the power source voltage value falls below the second threshold value Vb. Therefore, when the power source voltage value is kept between the first threshold value Vb and the second threshold value Vd for a long time, the actuator apparatus can continue the control of the damper 8 without setting the supply power to zero. As a result, the actuator apparatus can maintain the excellent ride comfort.

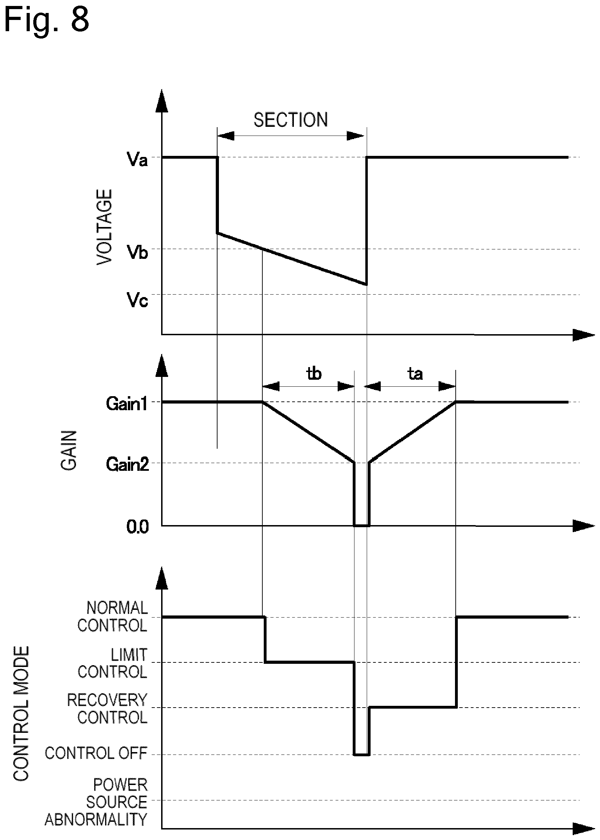

Next, Fig. 8 illustrates a third embodiment. The third embodiment is characterized by being configured to reduce a control gain when the voltage detection value falls below the first threshold value. The third embodiment will be described, indicating similar components to the first embodiment by the same reference numerals and omitting descriptions thereof.

In the above-described first embodiment, the actuator apparatus reduces the output current limit value (the maximum current value Imax) when the voltage detection value falls below the first threshold value Vb. On the other hand, in the third embodiment, the actuator apparatus reduces the control gain when the voltage detection value falls below the first threshold value Vb. In other words, the control gain is targeted for the control in the limit control mode.

Fig. 8 illustrates the operation when the actuator apparatus shifts to the control OFF mode after shifting to the limit control mode due to the voltage reduction, but does not reach the power source abnormality mode. In Fig. 8, Gain1 represents a control gain at the time of the normal operation (for example, 1.0 time), and Gain2 represents a control gain corresponding to 0 A (for example, 0.5 times).

The third embodiment is configured to reduce the supply power directed to the damper 8 by the limit control workable as described above (i.e., by changing the control gain), and a basic operation thereof is not especially different from the operation according to the first embodiment. Especially, in the second embodiment, the control gain is targeted for the limit (targeted for the control) in the limit control mode. In other words, the actuator apparatus is configured to reduce the control gain as the limit control. Therefore, compared to when the output current limit value (the maximum current value Imax) is reduced, the actuator apparatus reduces the output current even in such a state that the limit is not applicable to the current output value, thereby being able to achieve a further reduction in the load on the battery and construct a system placing further importance on the safety.

Next, Fig. 9 illustrates a fourth embodiment. The fourth embodiment is characterized by being configured to use information about a speed of the railway vehicle and a point where the railway vehicle is presently running (mileage information) as the running state, and also predict the power source reduction based on this information in advance (i.e., adjust the threshold value for the limit control). The fourth embodiment will be described, indicating similar components to the first embodiment by the same reference numerals and omitting descriptions thereof.

In the railway vehicle, the control device 21 for the control suspension system (for the damper 8) can often acquire the speed information and the mileage information of the railway vehicle 1 from the vehicle side. In the fourth embodiment, a further accurate and stable voltage reduction detection system is constructed by using these pieces of information. In other words, in the fourth embodiment, the actuator apparatus additionally includes a logic for setting the first threshold value Vb, the first predetermined time tb, and the third predetermined time tc, which are the parameters, according to the speed/mileage information. More specifically, the actuator apparatus confirms whether the speed/mileage information is available at a stage prior to monitoring the power source voltage, and, if these pieces of information are acquired, determines whether the railway vehicle 1 is presently running on a point in the vicinity of the section (the dead section) based on the acquired speed/mileage information. Then, according to a result thereof, the actuator apparatus selects (sets) any of "normal running parameters" and "section running parameters" as the parameters for use in the determination.

For example, as the normal running parameters, the first predetermined time tb, which is the determination value (the threshold value) for shifting from the limit control mode to the control OFF mode, and the third predetermined time tc, which is the determination value (the threshold value) for shifting from the control OFF mode to the power source abnormality mode, can be set to shorter times than the section running parameters. This is because it is revealed that the railway vehicle 1 will not pass through the section, and therefore a reduction in the voltage highly likely means that the abnormality has occurred. In this case, the actuator apparatus quickly determines the power source abnormality and stops the control (quickly shifts to the control OFF mode or the power source abnormality mode). As a result, the actuator apparatus can achieve further improvement of the safety.

On the other hand, as the section running parameters, the first threshold value Vb, which is the determination value (the threshold value) for shifting from the normal control mode to the limit control mode, i.e., the determination value (the threshold value) for detecting the voltage reduction, can be set to a relatively high value. Further, in addition thereto, as the section running parameters, the first predetermined time tb, which is the determination value (the threshold value) for shifting from the limit control mode to the control OFF mode, can be set based on a length of the section which the railway vehicle 1 passes through and the present speed information. For example, when the railway vehicle 1 is running at 200 kilometers per hour and is passing through a section 100 m in length, it takes approximately 1.8 seconds. In this case, for example, setting the first predetermined time tb to 2.0 seconds can prevent the control from being turned off due to the voltage reduction according to the passage through the section, unless the power source abnormality has occurred. Further, when the abnormality has occurred while the railway vehicle 1 is running through the section, the actuator apparatus can detect this abnormality in a short time (can shift to the control OFF mode or the power source abnormality mode).

Fig. 9 illustrates control processing according to the fourth embodiment that is performed by the control device 21 (the microcomputer 22 thereof). In Fig. 9, processing indicated by a portion surrounded by an alternate long and two short dashes line is added to the processing flow illustrated in Fig. 3 according to the first embodiment. In other words, processing from S1 to S11 illustrated in Fig. 9 is similar to the processing from S1 to S11 illustrated in Fig. 3 according to the first embodiment, and therefore detailed descriptions thereof will be omitted here.

That is, when the control processing illustrated in Fig. 9 is started by powering on (starting the power supply to) the control device 21 (the microcomputer 22 thereof), in S21, the control device 21 determines whether the speed/mileage information is acquired. If "NO" is determined in S21, i.e., the speed/mileage information is determined not to be acquired (be unable to be acquired), the flow proceeds to S1. On the other hand, if "YES" is determined in S21, i.e., the speed/mileage information is determined to be acquired, the flow proceeds to S22. In S22, the control device 21 determines the running state of the railway vehicle 1. In other words, in S22, the control device 21 acquires the speed/mileage information and also determines whether the railway vehicle 1 is approaching the section (for example, whether the railway vehicle 1 is running normally or running in the section) based on the acquired speed/mileage information. In a subsequent step, S23, the control device 21 determines whether the railway vehicle 1 is running normally. In other words, in S23, the control device 21 determines whether the railway vehicle 1 is presently running normally (conversely, whether the railway vehicle 1 is not running in the section) based on the running state determined in S22.

If "YES" is determined in S23, i.e., the railway vehicle 1 is determined to be running normally, the flow proceeds to S24, in which the control device 21 selects the normal running parameters. In other words, the control device 21 sets the first predetermined time tb and the third predetermined time tc to shorter times than when the section running parameters are selected. On the other hand, if "NO" is determined in S23, i.e., the railway vehicle 1 is determined not to be running normally (determined to be running in the section), the flow proceeds to S25, in which the control device 21 selects the section running parameters. In other words, the control device 21 sets the first threshold value Vb to a relatively high value, and also sets the first predetermined time tb based on the length of the section which the railway vehicle 1 passes through and the present speed information.

After setting (selecting) the parameters in S24 or S25, the flow proceeds to S1. If "YES" is determined in S2 illustrated in Fig. 9, the flow returns to before step S21 and repeats the processing in S21 and steps subsequent thereto. Further, if the control device 21 shifts to the normal control mode in S7 illustrated in Fig. 9, the flow returns to before step S21 and repeats the processing in S21 and the steps subsequent thereto.

The fourth embodiment is configured to adjust the parameters (adjust the first threshold value Vb, the first predetermined time tb, and the third predetermined time tc) according to the running state (whether the railway vehicle 1 is passing through the section) by the processing in S21 to S25 as described above, and a basic operation thereof is not especially different from the operation according to the first embodiment. Especially, in the fourth embodiment, the actuator apparatus can construct a further highly effective power source abnormality detection logic based on the information about the speed of the railway vehicle 1 and the point where the railway vehicle 1 is presently running (the mileage information).

That is, the actuator apparatus determines whether the railway vehicle 1 is approaching the section based on the mileage information, and sets the parameters (the threshold value and the predetermined times) based on the length of this section and the present speed if the railway vehicle 1 will pass through the section from now, thereby being able to detect (determine) the abnormality of the power source reduction optimally according to the situation at that time. As a result, the actuator apparatus can further improve the ride comfort of the vehicle and the securement of the safety of the system. In sum, in the fourth embodiment, the actuator apparatus can construct a system that detects the abnormality of the power source reduction optimally according to the running state at that time and the section where the railway vehicle 1 is passing through, thereby further improving the ride comfort of the vehicle and the safety of the system.

In the first embodiment, the actuator apparatus has been described as being configured in such a manner that the power is supplied from the overhead line 9 to the damper 8 via the battery 12 by way of example. However, the actuator apparatus is not limited thereto, and, for example, may be configured in such a manner that the power is supplied from the generator of the railway vehicle to the damper (the actuator) via the battery. The same also applies to the second to fourth embodiments.

In the first embodiment, the actuator apparatus has been described as being configured in such a manner that the damper 8 as the actuator is disposed between the vehicle body 2 and the bogie 3 by way of example. However, the actuator apparatus is not limited thereto, and, for example, the actuator may be disposed between the bogie and the wheel. Alternatively, the actuator may be disposed between the vehicle body and the vehicle body of the railway vehicle including the plurality of vehicle bodies coupled with each other. In other words, the actuator can be disposed at a portion where the force should be generated on the railway vehicle. In sum, the control device may be configured to control various kinds of dampers mounted on the railway vehicle, such as the primary damper provided between the bogie and the wheel, a yaw damper provided between the vehicle body and the bogie, and an inter-vehicle body yaw damper provided between the adjacent vehicle bodies. The same also applies to the second to fourth embodiments.

In the above-described first embodiment, the damper 8 has been described as being implemented with use of the damping force adjustable hydraulic shock absorber capable of changing the damping force characteristic continuously (in a stepless manner) by way of example. However, the damper 8 is not limited thereto, and, for example, may be implemented with use of the damping force adjustable hydraulic shock absorber capable of changing the damping force characteristic discontinuously (in a multi-step manner) through two steps (for example, ON and OFF) or three steps, or a further larger number of steps (four steps or more). The same also applies to the second to fourth embodiments.

In the above-described first embodiment, the damper 8 has been described as being implemented with use of the hydraulic shock absorber, and, more specifically, the semi-active damper capable of performing the semi-active control by way of example. However, the damper 8 is not limited thereto, and may be implemented with use of the full-active damper capable of performing the full-active control, such as a hydraulic actuator and an electric actuator. The same also applies to the second to fourth embodiments.

Further, each of the embodiments is only an example, and it is apparent that the configurations indicated in the different embodiments can be partially replaced or combined.

Possible configurations as an actuator apparatus based on the above-described embodiments include the following examples.

According to a first configuration, the actuator apparatus includes an actuator disposed between a bogie including a wheel of a railway vehicle and a vehicle body of the railway vehicle mounted on the bogie, between the bogie and the wheel, or on a railway vehicle including a plurality of the vehicle bodies coupled with each other and between one of the vehicle bodies and another of the vehicle bodies. The actuator is configured to be able to control a force generated by power supplied from at least one power source of an overhead line and a generator of the railway vehicle via a battery. The actuator apparatus further includes a detector configured to detect a voltage of the battery, and a control device configured to control the supply power to be supplied to the actuator according to a running state of the railway vehicle. The control device performs limit control of reducing the supply power when a voltage detection value detected by the detector falls below a first threshold value due to passage through a section of the overhead line or a reduction in a voltage of the generator, compared to the supply power employed when the voltage detection value does not fall below the first threshold value.

According to this first configuration, when the voltage detection value falls below the first threshold value, the actuator apparatus performs the limit control of employing lower supply power as the supply power directed to the actuator than when the voltage detection value does not fall below the first threshold value. At this time, the actuator apparatus can continue control of the actuator (vibration damping control) without stopping it by reducing the supply power directed to the actuator without setting it to zero. More specifically, the actuator apparatus can continue the power supply to the actuator even when the voltage detection value reduces by setting the first threshold value as a determination value for determining that the supply power directed to the actuator should reduce although it does not have to reduce to as far as zero. Due to this configuration, the actuator apparatus can continue the control of the actuator compared to a configuration that sets the supply power directed to the actuator to zero when the voltage detection value reduces. As a result, the actuator apparatus can prevent or reduce the unnecessary deterioration of the ride comfort.

According to a second configuration, in the first configuration, the limit control includes performing recovery control of changing the supply power closer to the supply power employed when the voltage detection value does not fall below the first threshold value, when a voltage exceeding the first threshold value is detected after the voltage detection value detected by the detector falls below the first threshold value.

According to the second configuration, when the voltage detection value exceeds the first threshold value from the state lower than the first threshold value, the actuator apparatus performs the recovery control of changing the supply power directed to the actuator closer to the supply power employed when the voltage detection value does not fall below the first threshold value. Due to this configuration, the control of the actuator is recovered to control employed when the voltage detection value does not fall below the first threshold value. Therefore, the actuator apparatus can improve the ride comfort compared to a configuration that sets the supply power directed to the actuator to zero when the voltage detection value reduces and continuously keeps the supply power in the zero state.

As a third configuration, in the first or second configuration, the limit control includes setting the supply power to zero, when the voltage detection value detected by the detector falls below a second threshold value lower than the first threshold value or when a predetermined time has passed since the reduction in the voltage detection value detected by the detector to lower than the first threshold value.

According to this third configuration, the supply power directed to the actuator is set to zero when the voltage detection value falls below the second threshold value or the predetermined time has passed since the reduction to lower than the first threshold value. Due to this configuration, the actuator apparatus can set the supply power directed to the actuator to zero when the supply power directed to the actuator should be set to zero. In other words, the actuator apparatus can set the supply power directed to the actuator to zero when necessary by setting the second threshold value or the predetermined time as a determination value for determining that the supply power should be set to zero.

As a fourth configuration, in the first, second, or third configuration, the actuator is a damping force adjustable damper capable of controlling a damping force.

According to this fourth configuration, the actuator apparatus can adjust the damping force of the damper according to the supply power.

According to a fifth configuration, in the second configuration, the recovery control is control of gradually changing the supply power closer to the supply power employed when the voltage detection value does not fall below the first threshold value.

According to this fifth configuration, the actuator apparatus gradually changes the supply power directed to the actuator to the supply power employed when the voltage detection value does not below the first threshold value, thereby being able to gradually recover the control of the actuator. Therefore, the actuator apparatus can prevent or reduce a sudden change in the ride comfort, thereby also improving the ride comfort as a result of this effect.

The present invention is not limited to the above-described embodiments, and includes various modifications. For example, the above-described embodiments have been described in detail to facilitate better understanding of the present invention, and the present invention is not necessarily limited to the configuration including all of the described features.

### REFERENCE SIGN LIST

- 1: railway vehicle
- 2: vehicle body
- 3: bogie
- 4: wheel
- 8: damper (actuator)
- 12: battery
- 21: control device
- 22: micro-computer (microcomputer)
- 24: voltage reduction circuit (detector)

## Claims

1. An actuator apparatus for a railway vehicle (1), the actuator apparatus comprising:
an actuator (8) disposed between a bogie (3) including a wheel (4) of the railway vehicle (1) and a vehicle body of the railway vehicle (1) mounted on the bogie (3), between the bogie (3) and the wheel (4), or on a railway vehicle (1) including a plurality of the vehicle bodies (2) coupled with each other and between one of the vehicle bodies (2) and another of the vehicle bodies (2), the actuator being configured to be able to control a force generated by power supplied from a power source comprising at least one of an overhead line (9) and a generator of the railway vehicle (1) via a battery (12);
a detector (7) configured to detect a voltage of the battery (12); and
a control device (21) configured to control the supply power to be supplied to the actuator (8) according to a running state of the railway vehicle (1),
**characterized in that** the control device (21) is further configured to perform limit control of the supply power,
such that the supply power is not set to zero, when a voltage detection value of the battery (12) detected by the detector (7) falls below a first threshold value due to passage through a section of the overhead line (9) or a reduction in a voltage of the generator, and
such that the supply power is set to be lower than the supply power that is employed when the voltage detection value does not fall below the first threshold value.

2. The actuator apparatus according to claim 1, wherein the limit control includes performing recovery control of increasing the supply power so as to change it closer to the supply power employed when the voltage detection value does not fall below the first threshold value, when a voltage exceeding the first threshold value is detected after the voltage detection value detected by the detector (7) falls below the first threshold value.

3. The actuator apparatus according to claim 1 or 2, wherein the limit control includes setting the supply power to zero, when the voltage detection value detected by the detector (7) falls below a second threshold value lower than the first threshold value or when a predetermined time has passed since the voltage detection value detected by the detector (7) falls below the first threshold value.

4. The actuator apparatus according to any of claims 1 to 3, wherein the actuator (8) is a damping force adjustable damper capable of controlling a damping force.

5. The actuator apparatus according to claim 2, wherein the recovery control is control of gradually changing the supply power closer to the supply power employed when the voltage detection value does not fall below the first threshold value.

## Patentansprüche

1. Stellantriebseinrichtung für ein Schienenfahrzeug (1), wobei die Stellantriebseinrichtung umfasst:
einen Stellantrieb (8), der zwischen einem Drehgestell (3), das ein Rad (4) des Schienenfahrzeugs (1) umfasst, und einem Fahrzeugaufbau des Schienenfahrzeugs (1), der auf dem Drehgestell (3) montiert ist, zwischen dem Drehgestell (3) und dem Rad (4) angeordnet ist, oder auf einem Schienenfahrzeug (1), das eine Vielzahl von Fahrzeugaufbauten (2) umfasst, die miteinander gekoppelt sind, und zwischen einem der Fahrzeugaufbauten (2) und einem anderen der Fahrzeugaufbauten (2), wobei der Stellantrieb konfiguriert ist, um imstande zu sein, eine Kraft zu steuern, die durch einen Strom erzeugt wird, der von einer Stromquelle, die mindestens eines von einer Oberleitung (9) und einem Generator des Schienenfahrzeugs (1) umfasst, über eine Batterie (12) zugeführt wird;
einen Detektor (7), der konfiguriert ist, um eine Spannung der Batterie (12) zu detektieren; und
eine Steuervorrichtung (21), die konfiguriert ist, um den Einspeisestrom, mit dem der Stellantrieb (8) gespeist werden soll, entsprechend einem Fahrzustand des Schienenfahrzeugs (1) zu steuern,
**dadurch gekennzeichnet, dass**
die Steuervorrichtung (21) weiter konfiguriert ist, um eine Grenzwertsteuerung des Einspeisestroms durchzuführen,
sodass der Einspeisestrom nicht auf Null gesetzt ist, wenn ein Spannungsdetektionswert der Batterie (12), der durch den Detektor (7) detektiert wird, aufgrund einer Durchfahrt durch einen Abschnitt der Oberleitung (9) oder einer Spannungsabsenkung des Generators unter einen ersten Schwellenwert fällt, und
sodass der Einspeisestrom gesetzt wird, um niedriger als der Einspeisestrom zu sein, der eingesetzt wird, wenn der Spannungsdetektionswert nicht unter den ersten Schwellenwert fällt.

2. Stellantriebseinrichtung nach Anspruch 1, wobei die Grenzwertsteuerung die Durchführung einer Rückgewinnungssteuerung zum Erhöhen des Einspeisestroms umfasst, um ihn näher an den Einspeisestrom hin zu ändern, der eingesetzt wird, wenn der Spannungsdetektionswert nicht unter den ersten Schwellenwert fällt, wenn eine Spannung, die den ersten Schwellenwert überschreitet, detektiert wird, nachdem der Spannungsdetektionswert, der durch den Detektor (7) detektiert wird, unter den ersten Schwellenwert gefallen ist.

3. Stellantriebseinrichtung nach Anspruch 1 oder 2, wobei die Grenzwertsteuerung das Setzen des Einspeisestroms auf Null umfasst, wenn der Spannungsdetektionswert, der durch den Detektor (7) detektiert wird, unter einen zweiten Schwellenwert fällt, der der niedriger als der erste Schwellenwert ist, oder wenn eine vorbestimmte Zeit verstrichen ist, seitdem der Spannungsdetektionswert, der durch den Detektor (7) detektiert wird, unter den ersten Schwellenwert gefallen ist.

4. Stellantriebseinrichtung nach einem der Ansprüche 1 bis 3, wobei der Stellantrieb (8) ein Dämpfer mit verstellbarer Dämpfungskraft ist, der imstande ist, eine Dämpfungskraft zu steuern.

5. Stellantriebseinrichtung nach Anspruch 2, wobei die Rückgewinnungssteuerung eine Steuerung zum allmählichen Ändern des Einspeisestroms näher an dem Einspeisestrom ist, der eingesetzt wird, wenn der Spannungsdetektionswert nicht unter den ersten Schwellenwert fällt.

## Revendications

1. Appareil actionneur pour un véhicule ferroviaire (1), l'appareil actionneur comprenant :
un actionneur (8) disposé entre un bogie (3) incluant une roue (4) du véhicule ferroviaire (1) et une carrosserie de véhicule du véhicule ferroviaire (1) montée sur le bogie (3), entre le bogie (3) et la roue (4), ou sur un véhicule ferroviaire (1) incluant une pluralité des carrosseries de véhicule (2) couplées les unes aux autres et entre l'une des carrosseries de véhicule (2) et une autre des carrosseries de véhicule (2), l'actionneur étant configuré pour pouvoir commander une force générée par de la puissance fournie à partir d'une source d'alimentation comprenant au moins une d'une ligne aérienne (9) et d'un générateur du véhicule ferroviaire (1) via une batterie (12) ;
un détecteur (7) configuré pour détecter une tension de la batterie (12) ; et
un dispositif de commande (21) configuré pour commander la puissance d'alimentation à fournir à l'actionneur (8) en fonction d'un état de roulage du véhicule ferroviaire (1),
**caractérisé en ce que**
le dispositif de commande (21) est en outre configuré pour effectuer une commande de limite de la puissance d'alimentation,
de sorte que la puissance d'alimentation n'est pas réglée à zéro, lorsqu'une valeur de détection de tension de la batterie (12) détectée par le détecteur (7) tombe en dessous d'une première valeur de seuil du fait d'un passage dans une section de la ligne aérienne (9) ou une réduction d'une tension du générateur, et
de sorte que la puissance d'alimentation est réglée pour être inférieure à la puissance d'alimentation qui est utilisée lorsque la valeur de détection de tension ne tombe pas en dessous de la première valeur de seuil.

2. Appareil actionneur selon la revendication 1, dans lequel la commande de limite inclut une exécution d'une commande de récupération consistant à augmenter la puissance d'alimentation de manière à la rapprocher de la puissance d'alimentation utilisée lorsque la valeur de détection de tension ne tombe pas en dessous de la première valeur de seuil, lorsqu'une tension dépassant la première valeur de seuil est détectée après que la valeur de détection de tension détectée par le détecteur (7) tombe en dessous de la première valeur de seuil.

3. Appareil actionneur selon la revendication 1 ou 2, dans lequel la commande de limite inclut un réglage de la puissance d'alimentation à zéro, lorsque la valeur de détection de tension détectée par le détecteur (7) tombe en dessous d'une seconde valeur de seuil inférieure à la première valeur de seuil ou lorsqu'un temps prédéterminé s'est écoulé depuis que la valeur de détection de tension détectée par le détecteur (7) tombe en dessous de la première valeur de seuil.

4. Appareil actionneur selon l'une quelconque des revendications 1 à 3, dans lequel l'actionneur (8) est un amortisseur à force d'amortissement ajustable capable de commander une force d'amortissement.

5. Appareil actionneur selon la revendication 2, dans lequel la commande de récupération est une commande de rapprochement graduelle de la puissance d'alimentation à la puissance d'alimentation utilisée lorsque la valeur de détection de tension ne tombe pas en dessous de la première valeur de seuil.
